(19) Europäisches Patentamt

European Patent Office

Office européen des brevets

(11) Veröffentlichungsnummer: **0 077 914**
**B1**

(12) **EUROPÄISCHE PATENTSCHRIFT**

(45) Veröffentlichungstag der Patentschrift:
04.02.87

(21) Anmeldenummer: 82108589.1

(22) Anmeldetag: 17.09.82

(51) Int. Cl.⁴: **F 03 D 1/00**, F 03 D 9/00,
F 03 D 11/04, B 63 H 13/00

(54) Windkraftanlage mit mindestens einem um eine Drehachse drehbaren Flügel.

(30) Priorität: 26.10.81 DE 3142434
10.04.82 DE 3213396

(43) Veröffentlichungstag der Anmeldung:
04.05.83 Patentblatt 83/18

(45) Bekanntmachung des Hinweises auf die Patenterteilung:
04.02.87 Patentblatt 87/6

(84) Benannte Vertragsstaaten:
AT BE CH FR GB IT LI NL SE

(56) Entgegenhaltungen:
DE-A-2 806 874
DE-A-2 940 485
DE-A-2 944 718
DE-B-2 753 956
DE-C-577 917
DE-C-877 280
DE-C-907 400
FR-A-542 172
FR-A-2 464 384
FR-A-2 486 018
US-A-2 627 928

THE ENGINEER, Band 239, Nr. 6180/81, 22./29.
August 1974, Seiten 55-59, Morgan-Grampian Ltd.,
London, G.B.

(73) Patentinhaber: Öko- Energie AG, Hegibachstrasse
110, CH- 8032 Zürich (CH)

(72) Erfinder: Wagner, Günter, Dr., Süderheide 1, CH-
2282 List (CH)

(74) Vertreter: Schmidt- Bogatzky, Jürgen, Dr. Ing.,
Schlossmühlendamm 4, D-2100 Hamburg 90 (DE)

## Beschreibung

Die Erfindung betrifft eine Windkraftanlage mit einem Rotor mit mindestens einem Flügel, dessen Drehachse schiefwinklig zur Horizontalen angeordnet ist und dessen zur Aufnahme des Flügelfußes dienende Nabe mit zugehörigen Energieübertragungsmitteln mit einem Auflagerstück verbunden ist, das auf einer auf zumindest annähernd Nullniveau befindlichen Grundfläche um eine vertikale Achse drehbar angeordnet ist.

Eine Windkraftanlage mit einem derartigen Rotor ist durch die DE-C 907 400 bekannt geworden. Bei diesem Rotor ist die Drehachse zur Horizontalen schiefwinklig ausgerichtet, wobei die Rotorblätter radial senkrecht zur Drehachse angeordnet sind. Die Windeinfangfläche dieses Rotors ist somit relativ gering. Insbesondere bei Großanlagen sind bei derartigen Windrotoren aufwendige bauliche Maßnahmen erforderlich, um die Lasten des Turmes, der Gondel, der Nabe, des Getriebes und des Generators aufnehmen zu können. Bezogen auf die Energieausbeute erfordern derartige Windrotoren einen hohen Investitionsaufwand.

Die Aufgabe der Erfindung besteht darin, eine gattungsgemäße Windkraftanlage so auszubilden, daß gegenüber den bekannten Horizontal- und Vertikalläufern der Investitionsaufwand vermindert und die Leistungsfähigkeit erhöht wird, wobei die Windkraftanlage im Betrieb zuverlässig langlebig und wartungsfrei sein und bei einem hohen Wirkungsgrad einen einfachen und unkomplizierten Aufbau haben soll.

Erfindungsgemäß erfolgt die Lösung der Aufgabe dadurch, daß die Längsachsen der Flügel des Rotors schiefwinklig derart zur Drehachse des Rotors angeordnet sind, daß bei Drehen des Rotors jeder Flügel eine zumindest annähernd horizontale Position durchläuft. Bei dieser Lösung befinden sich sämtliche schweren maschinentechnischen Elemente, wie Getriebe, Naben und Generatoren auf dem Boden und erfordern keine Hochbaumaßnahmen. Da sowohl der Stützflügel wie auch die Arbeitsflügel umlaufend eine Horizontalposition einnehmen können, ist die Montage, Inspektion und Reparatur erheblich erleichtert. Darüber hinaus kann ein Flügel des Rotors zur Sturmsicherheit in dieser Position arretiert werden.

Weitere Merkmale der Erfindung werden in den Untersprüchen beschrieben. In den Zeichnungen sind Ausführungsbeispiele der Erfindung dargestellt, die nachstehend näher erläutert werden. Es zeigt

Fig. 1 den Rotor einer erfindungsgemäßen Windkraftanlage in einer schematischen Seitenansicht,

Fig. 2 eine weitere Ausbildung eines Rotors in einer schematischen Seitenansicht,

Fig. 3a die Ausbildung von schwimmenden Windkraftbis 3d anlagen in verschiedenen Ansichten

Fig. 4a eine als Offshorewindkraftwerk ausgebildete und 4b Windkraftanlage in schaubildlichen Ansichten,

Fig. 5a eine Ausbildung eines Flügels eines Rotors für eine Windkraftanlage in einer Explosionsdarstellung,

Fig. 5b eine andere Ausbildung eines Flügels in einer Seitenansicht im Schnitt,

Fig. 6a eine Ausbildung eines gittermastartigen und 6b Flügels in einer Draufsicht und perspektivischen Ansicht,

Fig. 6c eine weitere Ausbildung eines Flügels in einer Seitenansicht im Schnitt,

Fig. 7 eine Ausbildung der Nabe des Rotors in einer schematischen Seitenansicht.

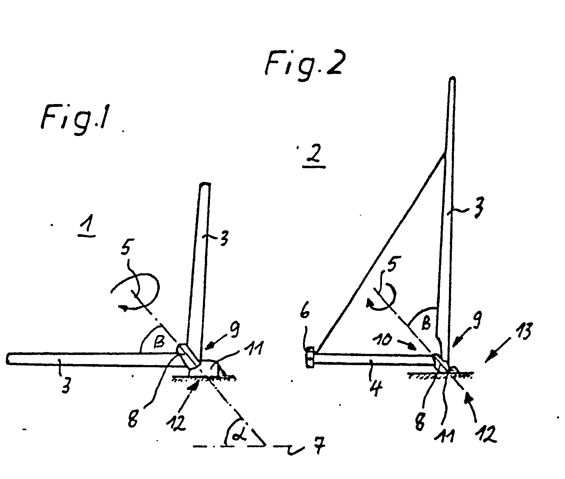

In den Fig. 1 und 2 sind zwei Rotoren 1, 2 dargestellt, deren Drehachse 5 aufgerichtet schiefwinklig zur Horizontalen 7 angeordnet ist. Jeder Rotor 1, 2 weist eine Nabe 8 auf, die drehbar mit einem Auflagerstück 11 verbunden ist. Das Auflagerstück 11 ist auf einer angedeuteten Grundplatte 12 angeordnet. Der Rotor 1 besteht aus zwei Arbeitsflügeln 3, deren Flügelfüße 9 mit der Nabe 8 verbunden sind. Der Rotor 2 weist demgegenüber nur einen Arbeitsflügel 3 auf, dem ein Stützflügel 4 zugeordnet ist. Auch der Flügelfuß 10 des Stützflügels 4 ist mit der Nabe 8 verbunden. An dem freien Endabschnitt des Stützflügels 4 ist ein Gegengewicht 6 angeordnet. Die Drehachsen 5 der Rotoren 1, 2 sind zur Horizontalen 7 in einem Winkel α von etwa 45° angeordnet. Der Winkel β zwischen der Drehachse 5 und dem Arbeitsflügel 3 bzw. Stützflügel 4 beträgt ebenfalls etwa 45°.

Die Auflagerstücke sind an einer Grundplatte 12 befestigt, die annähernd auf Nullniveau 13 angeordnet ist. Hierbei kann die Grundplatte 12 bzw. das Auflagerstück 11 mit einer Stelleinrichtung verbunden werden, die es ermöglicht, den Rotor 1, 2 horizontal in verschiedene Richtungen zu drehen. Es ist auch möglich, den Rotor 1, 2 mit einer vom Wind betätigbaren Leiteinrichtung zu versehen, die es ermöglicht, daß sich der Rotor 1, 2 stets in Windanströmrichtung dreht.

Es ist auch möglich, die Grundplatte 12 mit dem Auflagerstück 11 auf einem Schwimmkörper 18 anzuordnen. Hierdurch kann ein Offshore-Windkraftwerk ausgebildet werden.

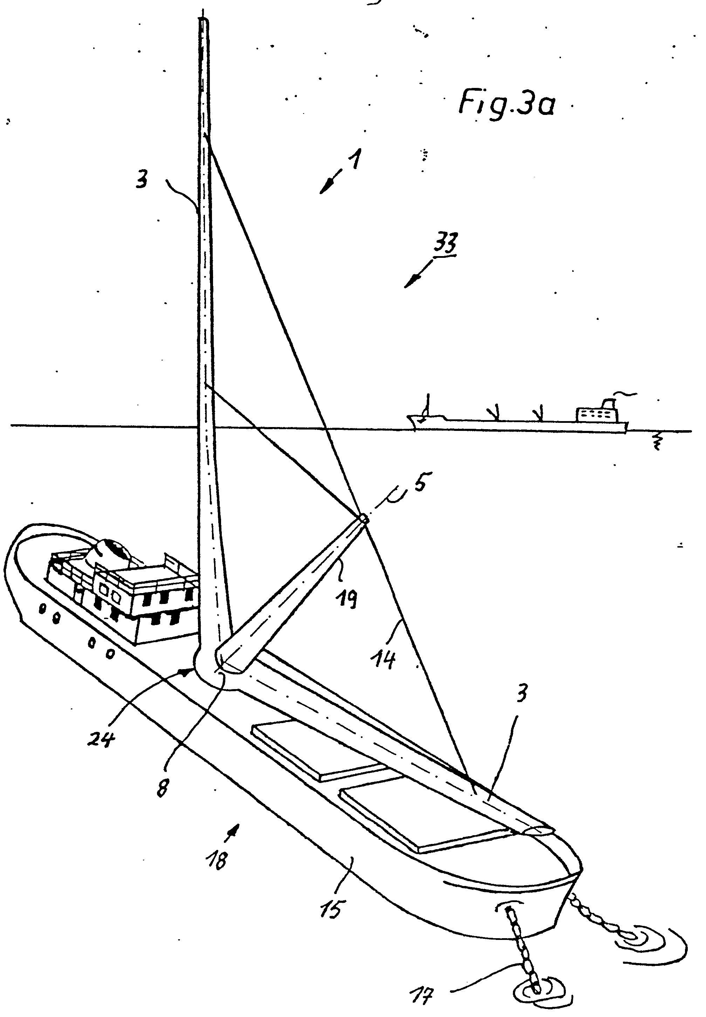

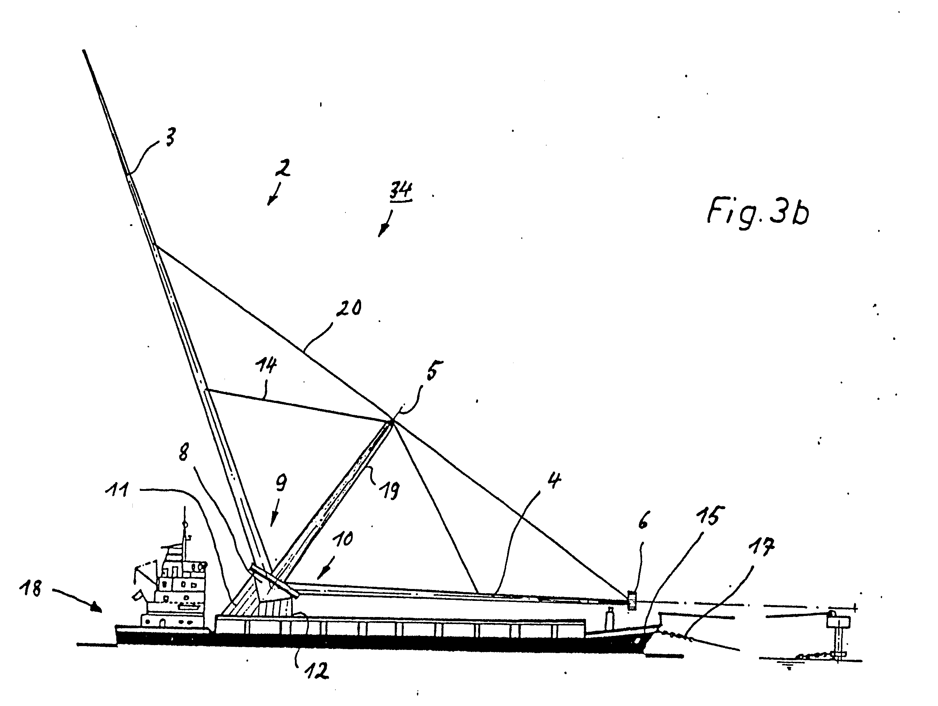

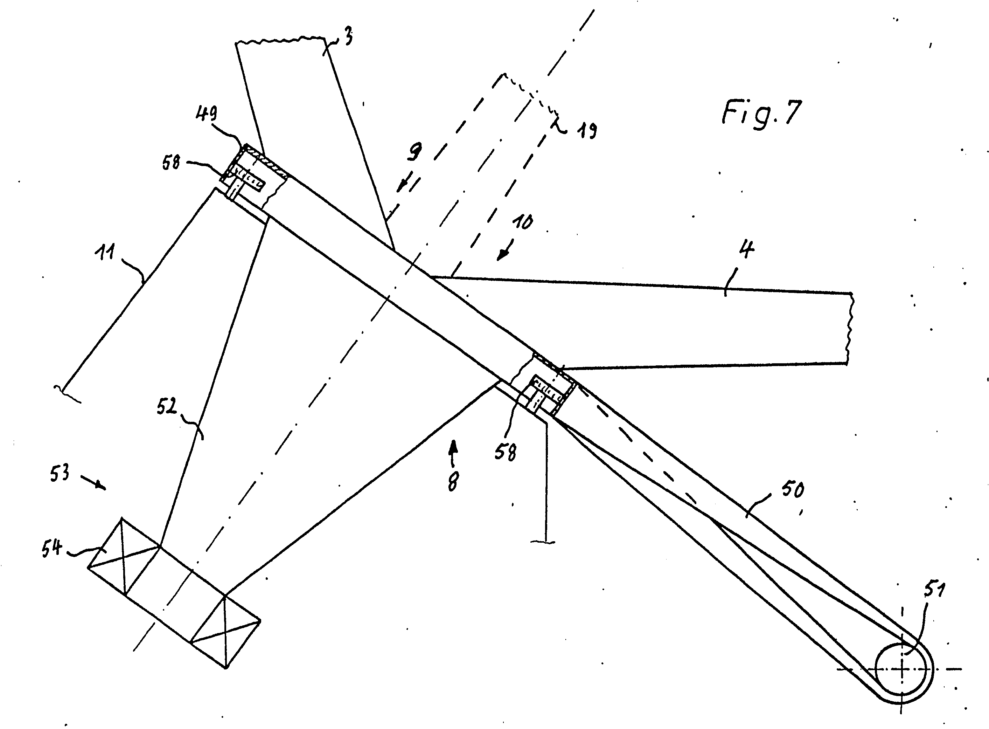

In den Fig. 3a und 3b sind zwei Windkraftanlagen 33, 34 dargestellt, bei denen jeweils ein Rotor 1, 2 auf einem Schiffsrumpf 15 angeordnet ist. Die Windkraftanlage 33 besteht aus einem Rotor 1 mit zwei Arbeitsflügeln 3, die mittels Spannseilen 14 mit einem koaxial zur Drehachse 5 auf der Nabe 8 angeordneten Pylon 19 verbunden sind. Das Hauptlager 24 befindet sich im Bereich der Nabe 8. Die Nabe 8 kann z.B. wie in Fig. 7 dargestellt ausgebildet sein. Hierbei sind die Flügelfüße 9, 10 und der Pylon 19 in einem Ring 49 vereinigt. Der Ring 49 kann zum Abbremsen oder Feststellen des Rotors 1, 2 dienen. Es ist auch möglich, den Ring 49 um feststehende Räder 58 rotieren zu lassen oder magnetisch in der Schwebe zu halten. Der Ring 49 kann auch als Riemenscheibe zur Kraftübertragung verwendet werden. Wenn hierbei der Übertragungsriemen 50 um 90° verschränkt wird, kann die Abtriebswelle 51 horizontal angeordnet sein. Der Ring 49 kann mit einem Kegelstumpf 52 verbunden sein, der drehbar mit seinem freien Endabschnitt 53 in einem Zapfenlager 54 gelagert ist. Die Windkraftanlage 34 weist einen Rotor 2 mit einem Arbeitsflügel 3 und einem Stützflügel 4 auf. Der Arbeitsflügel 3 und der Stützflügel 4 sind mittels Spannseilen 14, 20 mit einem Pylon 19 verbunden, der ebenfalls koaxial zur Drehachse 5 auf der Nabe 8 angeordnet ist.

Der Schiffsrumpf 15 ist mittels Ankerketten 17 auf dem Gewässer verankert und kann hierdurch jeweils so drehen, daß der Rotor 1 stets in der Windanströmrichtung ausgerichtet ist. Es ist auch möglich, den Schiffsrumpf 15 mittels Halteseilen an einem in den Meeresboden eingespülten Dalben zu befestigen.

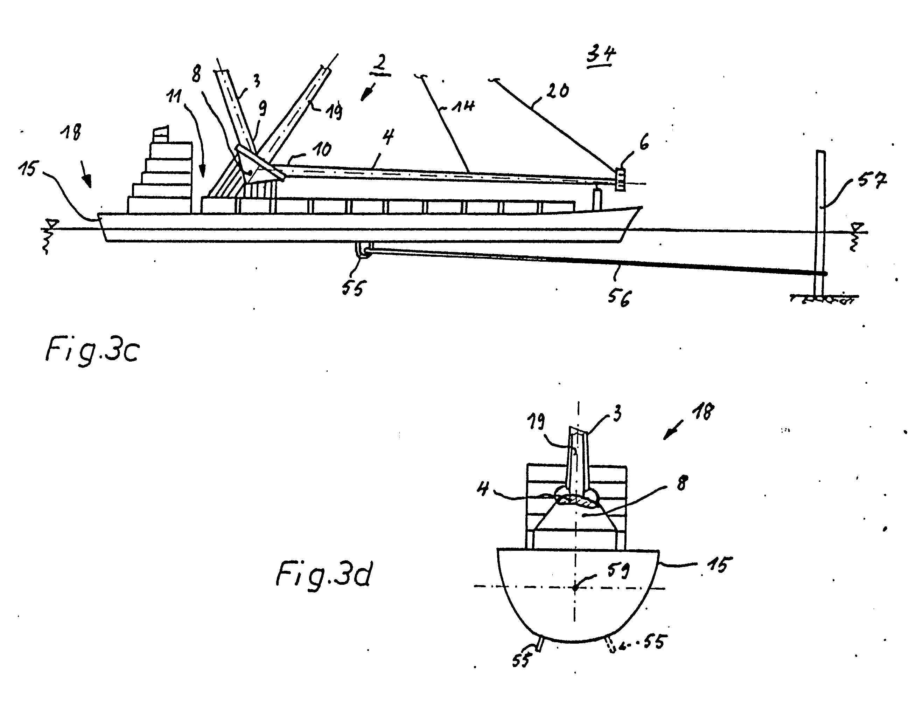

Bei ungünstigen Strömungsverhältnissen können die Ankerketten 17 oder Halteseile zur Kompensation von einseitigen Momenten unsymmetrisch am Schiffsrumpf 15 befestigt werden. Wenn bei Anordnung eines Rotors 1, 2 auf einem Schiffsrumpf 15 wie bei den Windkraftanlagen 33, 34 Wasserströmungen wie z. B. Tideströmungen ausgeglichen werden sollen, ist es zweckmäßig, die an Dalben, Pfählen 57 od. dgl. angeschlagenen Halteseile oder Ketten 56 am des Schiffslateralpunkt, also etwa in Schiffsmitte, an der Schiffsunterseite z. B. am Kiel zu befestigen (Fig. 3c). Um Drehmomentenkräfte des Rotors 1, 2 zusätzlich aufzufangen, kann der Befestigungsanschlag 55 der Halteseile oder Ketten 56 am Schiffsrumpf 15 nach Steuerbord oder Backbord aus der Längsachse 59 des Schiffsrumpfs 15 versetzt sein (Fig. 3d). Die Wasserströmung drückt hierbei mit etwa gleicher Kraft gegen den Bug und Heck. Der Schiffsrumpf 15 dreht sich dadurch nur um den Dalben oder Pfahl 57, aber nicht um sich selbst. Wenn der Windangriffsschwerpunkt für den Rotor 1, 2 etwa in der Mitte der Nabe 8 liegt, kann der Wind den Schiffsrumpf 15 unabhängig von dessen Bewegung um den Dalben oder Pfahl 57 um sich selbst in den Wind drehen. Zur weiteren Stabilisierung kann auch noch eine Segelfläche am Heck des Schiffsrumpfes 15 wie z. B. ein Besanmast mit Segel vorgesehen werden.

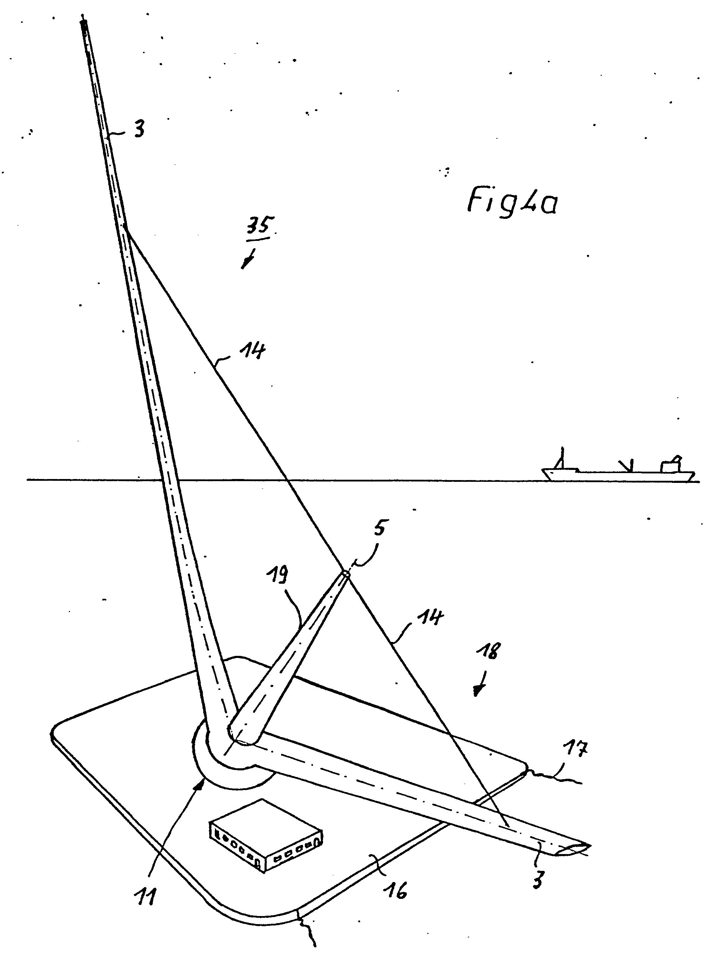

Eine weitere Ausbildung einer Windkraftanlage 35 als Offshore-Windkraftwerk ist in Fig. 4a dargestellt. Hier ist ein Rotor 1 mit einem Pylon 19 in der Ausbildung wie bei der Windkraftanlage 33 auf einem Ponton 16 angeordnet. Der Ponton 16 ist ebenfalls mittels Ankerketten 17 so verankert, daß sich der Rotor 1 stets in die Windanströmrichtung eindrehen kann. Es ist aber auch möglich, das Auflagerstück 11 mittels einer Stelleinrichtung drehbar auszubilden, so daß bei feststehendem Ponton 16 der Rotor 1 in die jeweilige Windanströmrichtung eingedreht wird. Der Ponton 16 kann sowohl rechteckförmig wie auch kreisrund oder aber polygonal ausgebildet sein. Es ist auch möglich, den Ponton 16 mit seitlichen Auslegern zu versehen, um so die Stabilität des Pontons 16 zu erhöhen.

Bei der in Fig. 4b dargestellten Windkraftanlage 36 ist der Rotor 1 mit weiteren Versteifungsmitteln versehen. Der Rotor 1 befindet sich auf einem Ponton 16, der wie bei der Windkraftanlage 35 ausgebildet sein kann. Die Arbeitsflügel 3 sind mittels starrer Verbindungselemente 21 verbunden, die an dem Pylon 19 befestigt sind. Um eine Drehbarkeit der Arbeitsflügel 3 um ihre Längsachsen zu ermöglichen, erfolgt die Befestigung der Verbindungselemente 21 an den Arbeitsflügeln 3 mittels Lagern 23. An dem oberen Endabschnitt des Pylons 19 ist ein Querträger 25 angeordnet, der parallel zur Bewegungsrichtung der Arbeitsflügel 3 ausgerichtet ist und der Schwerkraft der Arbeitsflügel 3 entgegenwirkt. Zwischen den Endabschnitten des Querträgers 25 und den Arbeitsflügeln 3 sind Drahtseile 26 od. dgl. gespannt. Hierzu sind an den Arbeitsflügeln 3 im Bereich von deren Längsschwerpunkten Lager 22 vorgesehen, an denen die Drahtseile 26 befestigt werden können. Es ist auch möglich, die Drahtseile und die Verbindungselemente 21 so an den Arbeitsflügeln 3 zu befestigen, daß diese durch Torsion den Windkräften und Zentrifugalkräften durch einen variablen Anstellwinkel angepaßt werden können. Zur Betätigung der Drahtseile 26 und der Verbindungselemente 21 können nicht näher dargestellte Stellelemente verwendet werden. Diese können entweder als passive Stellelemente wie Federn od. dgl. oder aber als aktive Stellelemente wie Hydraulikzylinder, motorische Antriebe oder aber auch als mit dem Pylon 19 z. B. über Exzenter verbundene Zwangssteuerungen ausgebildet sein. Dadurch können die Flügel 3, 4 zur Anspassung an die jeweiligen Betriebsbedingungen zyklisch verstellt werden.

An dem freien Endabschnitt des einen Arbeitsflügels 3 ist ein Sekundärrotor 32 angeordnet, der mit einer Energieerzeugungseinrichtung verbunden sein kann. Es ist in besonderen Fällen denkbar, daß über derartige Sekundärrotoren 32 die Erzeugung elektrischer Energie erfolgt. Es ist aber auch möglich, einen solchen Sekundärrotor 32 als Anfahrhilfe für den Rotor 1 zu verwenden. Durch eine entsprechende Anordnung eines Sekundärrotors 32 an einem der Arbeitsflügel 3 ist es möglich, einen kreisförmigen Strömungswirbel auszubilden, der den Wirkungsgrad des anderen Arbeitsflügels 3 erhöht. Durch die verbesserte Anströmung des anderen Arbeitsflügels 3 werden in Hinblick auf die Energieabnahme am Flügelfuß 9, 10 insbesondere bei großen Spannweiten Vorteile erzielt.

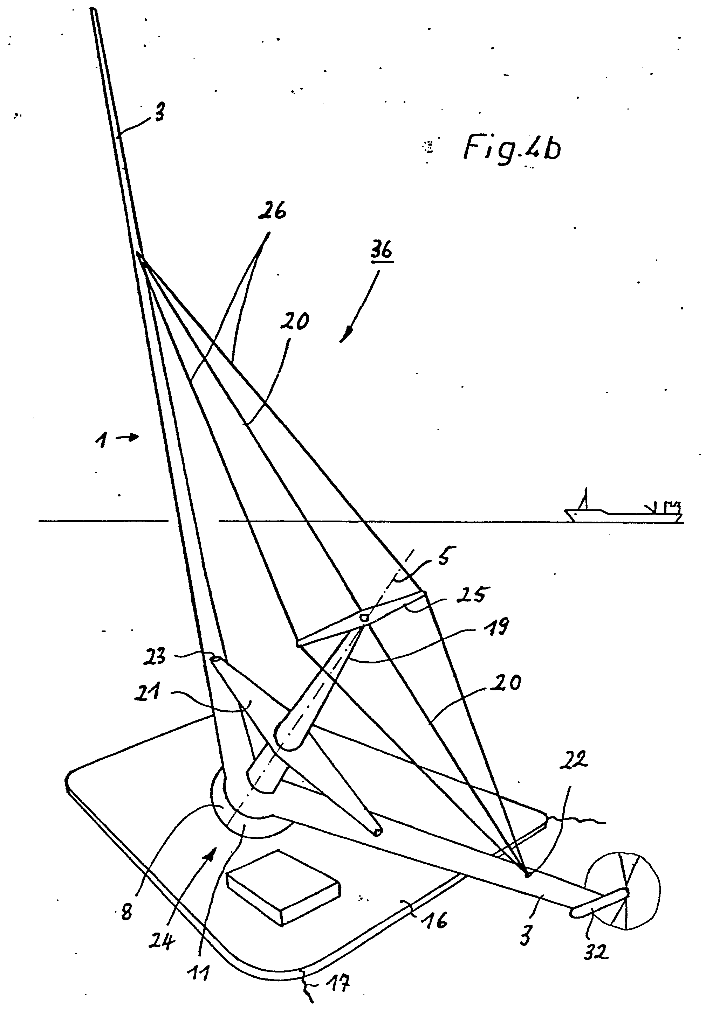

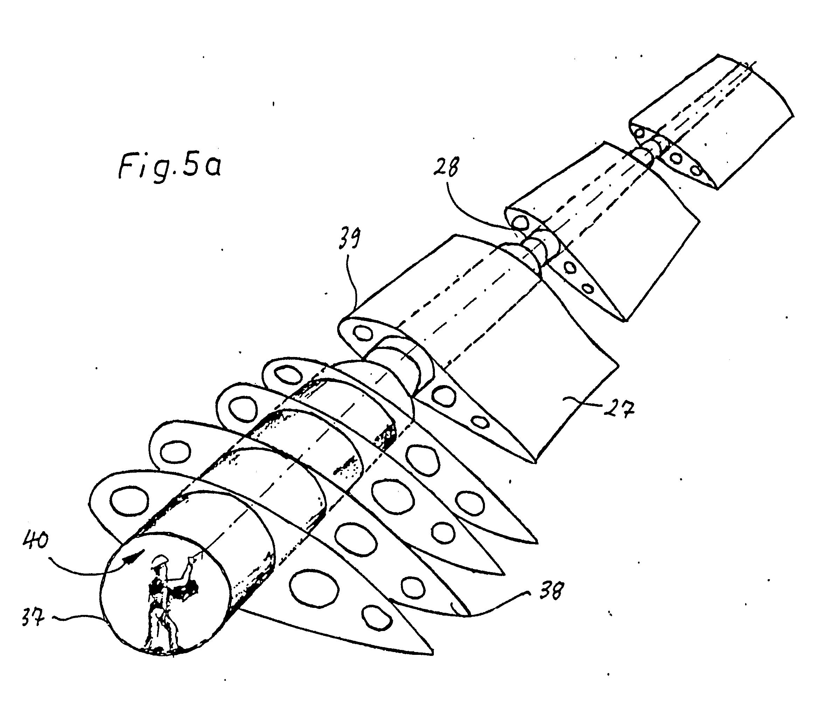

In Fig. 5a ist eine mögliche Ausbildung eines Arbeitsflügels 3 oder Stützflügels 4 dargestellt. Dieser Flügel besteht aus einem Holm 37, dessen innenseitiger Hohlraum 40 begehbar sein kann. Der Hohlraum 40 dient zur Aufnahme von Steuerelementen u. dgl. An dem Holm 37 sind im Abstand voneinander Spanten 38 befestigt, die in einer Beplankung 39 versehen werden. Der gesamte Flügel ist in verschiedene Flügelabschnitte 27 unterteilt, die mittels Gelenken 28 miteinander verbunden sind. Um diese Gelenke 28 sind die einzelnen Flügelabschnitte 27 jeweils relativ zueinander verdrehbar, so daß über die Streckung des Flügels abschnittsweise unterschiedliche Anstellwinkel der Flügelabschnitte 37 eingestellt werden können. Hierdurch ist es möglich, jeden Flügel an die jeweiligen Anströmverhältnisse optimal anzupassen.

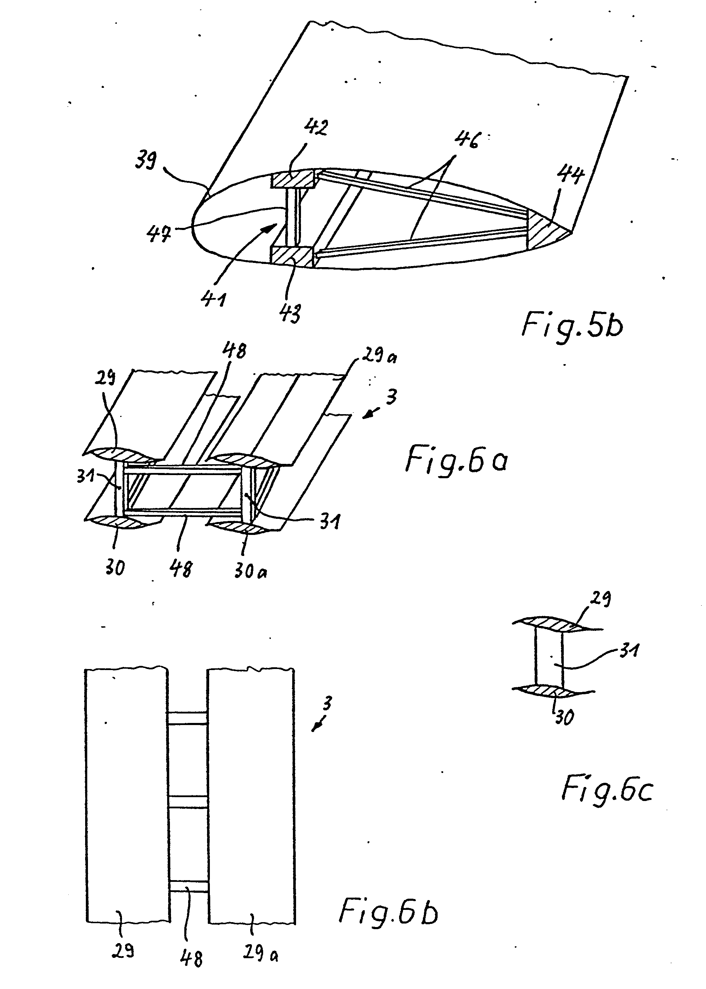

In Fig. 5b ist eine weitere Ausbildung eines Arbeitsflügels 3 oder Stützflügels 4 im Querschnitt dargestellt. Der Flügelkern wird durch einen Dreigurtträger 41 gebildet. Dieser besteht aus einem Obergurt 42, Untergurt 43 und Hintergurt 44. Der Hintergurt 44 befindet sich im Bereich der Flügelhinterkante. Obergurt 42 und Untergurt 43 sind durch Verstrebungen 47 verbunden. Zwischen dem Obergurt 42 bzw. dem Untergurt 43 und dem Hintergurt 44 sind Verstrebungen 46 angeordnet. Die Verstrebungen 46, 47 können gitterartig ausgebildet sein, um die Verwindungssteifigkeit zu erhöhen. Der Dreigurtträger 41 ist außenseitig mit einer Beplankung 39 aus Holz, Metallblech od. dgl. umgeben. Es kann aber auch in an sich bekannter Weise eine Bespannung vorgesehen werden.

Um den Wirkungsgrad eines Arbeitsflügels 3 zu erhöhen, kann dieser auch mit besonderen Auftriebshilfen versehen sein. Es ist auch möglich, den Arbeitsflügel 3 aus zwei Einzelflügeln 29, 30 auszubilden, die parallel zueinander schräg versetzt angeordnet sein können. Bei einer Anordnung der Einzelflügel 29, 30 übereinander ist es zweckmäßig, die Einzelflügel 29, 30 mittels profilierter Verbindungselemente 31 zu verbinden (Fig. 6c).

In Fig. 6a und 6b ist ein gittermastartig ausgebildeter Flügel des Rotors 1, 2 dargestellt. Er besteht aus vier Einzelflügeln 29, 29a, 39, 39a, die mittels vertikaler Verbindungselemente 31 und horizontaler Verbindungselemente 49 miteinander verbunden sind. Die Verbindungselemente 31, 48 sind vorzugsweise profiliert und gittermastartig angeordnet, so daß eine große Eigensteifigkeit des aus den vier Einzelflügeln 29, 29a, 39, 39a gebildeten Flügels gewährleistet ist.

Die Verbindungen sowohl innerhalb der Flügel 3, 4 wie auch der Verbindungselemente 31, 48 der Gitteranordnung kann durch Schweißen, Schrauben, Nieten oder Kleben erfolgen. Es ist auch möglich, röhrenförmige Gurte und Querverstrebungen mittels Rohrmuffen durch Schrumpfverbindungen zu verbinden. Hierdurch lassen sich auch hochfeste Federstähle verwenden, die nicht schweißbar sind.

Die beim Betrieb des Rotors 1, 2 durch die Flügelgewichte bewirkten Momente können zur Kompensation der Windbiegemomente herangezogen werden, indem z. B. bei einem Zweiflügler wie dem Rotor 2 das Flügelgewicht etwa zur Hälfte des zu erwartenden maximalen Windmomentes gewählt wird. Bei einem Einflügler wie beim Rotor 1 wird das Flügelgewicht als etwa 1/4 des zu erwartenden Windmomentes gewählt. Beim Rotor 1 wird der Stützflügel 4 unwuchtig gemacht, d. h. bei Vollast eine Zentrifugalkraft entwickelt, die größer ist als die des Arbeitsflügels 3. Als Richtwert soll die Zentrifugalkraft um etwa 1/4 des zu erwartenden maximalen Windmomentes größer sein. Zur Stromerzeugung werden zweckmäßigerweise Stromerzeuger verwendet, die nicht an eine feste Drehzahl gebunden sind, wie z. B. läufergespeiste Asynchronmaschinen. Es ist auch möglich, das Hauptlager 24 der Nabe 8 so auszubilden, daß im Bereich des Hauptlagers 24 unmittelbar elektrische Energie abgenommen werden kann. Hierzu kann in das Hauptlager 24 entweder ein entsprechend ausgebildeter elektrischer Generator integriert werden oder aber es findet ein Magnetsystem vergleichbar einem Linearmotorsystem Anwendung.

Der Generator kann parallel mit einer externen Antriebseinrichtung wie z. B. einer Gasturbine verbunden sein, um bei Windstille die weitere Energieerzeugung zu gewährleisten. Hierbei ist es möglich, die Abgase der Gasturbine über entsprechende Rohrleitungen zu einem an den Flügeln des Rotors 1, 2 ausgebildeten Düsensystem zu leiten, die beim Austritt der Abgase in die Atmosphäre den Rotor 1, 2 in eine Drehbewegung versetzen. Hierdurch kann die in den Abgasen enthaltene Energie zusätzlich zur Erzeugung elektrischer Energie mittels des Rotors 1, 2 verwandt werden.

Es ist auch möglich, Rotoren 1, 2 entsprechend der Erfindung unmittelbar mit Arbeitsgeräten wie z. B. Schneckenförderern zu verbinden. In diesem Fall wird das Profil der Flügel des Rotors 1, 2 symmetrisch ausgebildet, um von der Windanströmrichtung unabhängig zu sein. Darüber hinaus kann auch im Bereich der Nabe die Drehzahl des Rotors 1, 2 über ein Getriebe oder aber direkt auf eine Antriebswelle übertragen werden, die z. B. eine für einen Schiffsantrieb bestimmte Schraube aufweist. Der Rotor 1, 2 ist daher auch zum Antrieb von z. B. Sportbooten oder Spielzeugschiffen geeignet, um diese gegen den Wind fahren lassen zu können.

Es besteht auch die Möglichkeit, Rotoren 1, 2 beim Betrieb von Pumpspeicherwerken zu nutzen. In diesem Fall ist an jedem Rotor 1, 2 parallel zueinander ein Generator und eine Wasserpumpe angeschlossen. Gleichzeitig sind Wasserturbinen parallel zu den Rotoren 1, 2 mit den Generatoren verbunden. Die Rotoren 1, 2 dienen somit sowohl zum Antrieb der Wasserpumpe wie auch der Generatoren, was gleichzeitig oder wechselweise erfolgen kann. Bei gefülltem Pumpspeicherwerk kann dann mittels der Wasserturbinen über die Generatoren elektrische Energie erzeugt werden.

**Patentansprüche**

1. Windkraftanlage mit einem Rotor, dessen Drehachse schiefwinklig zur Horizontalen angeordnet ist und dessen zur Aufnahme des Flügelfußes dienende Nabe mit zugehörigen Energieübertragungsmitteln mit einem Auflagerstück verbunden ist das auf einer auf, zumindest annähernd Nullniveau befindlichen Grundfläche um eine vertikale Achse drehbar angeordnet ist dadurch gekennzeichnet, daß die Längsachsen der Flügel (3, 4) des Rotors (1, 2) schiefwinklig derart zur Drehachse (5) des Rotors (1, 2) angeordnet sind, daß beim Drehen des Rotors (1, 2) jeder Flügel (3, 4) eine zumindest annähernd horizontale Position durchläuft.

2. Windkraftanlage nach Anspruch 1, dadurch gekennzeichnet, daß jeder Flügel (3, 4) des Rotors (1, 2) in einem Winkel β von ca. 45° bis 55° zur Drehachse (5) des Rotors (1, 2) angeordnet ist.

3. Windkraftanlage nach Anspruch 1 und 2, dadurch gekennzeichnet, daß das mit dem Rotor (1,2) verbundene Auflagerstück (11) mit oder ohne Stelleinrichtung auf einem Gestell oder einem Schwimmkörper (18) angeordnet ist.

4. Windkraftanlage nach Anspruch 1 bis 3, dadurch gekennzeichnet, daß der Rotor (2) aus einem Arbeitsflügel (3) und einem Stützflügel (4) mit Gegengewicht besteht.

5. Windkraftanlage nach Anspruch 4, dadurch gekennzeichnet, daß der Arbeitsflügel (3) und der Stützflügel (4) mittels gegebenenfalls aerodynamisch profilierten Spannmitteln (14) miteinander verspannt sind.

6. Windkraftanlage nach Anspruch 4 und 5, dadurch gekennzeichnet, daß der Arbeitsflügel (3) in horizontaler Lage am Boden feststellbar ist.

7. Windkraftanlage nach Anspruch 3, dadurch gekennzeichnet, daß der Schwimmkörper (18) mittels Verankerungsmitteln in die jeweilige Windanströmrichtung sich selbst ausrichtend ausgebildet ist.

8. Windkraftanlage nach Anspruch 7, dadurch gekennzeichnet, daß die Verankerungsmittel derart mit dem Schwimmkörper (18) verbunden sind, daß durch die Strömungsverhältnisse des Wassers bedingte Momente auf den Schwimmkörper (18) in Bezug auf die Drehmomentkräfte des Rotors (1, 2) kompensierbar sind.

9. Windkraftanlage nach Anspruch 1 bis 8, dadurch gekennzeichnet, daß die Nabe (8) mit einem koaxial zur Drehachse (5) ausgerichteten starren oder drehbaren Pylon (19) verbunden ist, der zu den Flügeln des Rotors (1, 2) oder zum Boden verspannt ist.

10. Windkraftanlage nach Anspruch 9, dadurch gekennzeichnet, daß der Pylon (19) zur Ableitung radialer und tangentialer Kräfte an die Flügel des Rotors (1, 2) mit diesem mittels Spannseilen (20) und/oder Verbindungselementen (21) verbunden ist, die an Lagern (22, 23) befestigt sind.

11. Windkraftanlage nach Anspruch 9 und 10, dadurch gekennzeichnet, daß zwischen dem Pylon (19) und den Flügeln des Rotors (1, 2) im Abstand vom Hauptlager (24) steife Verbindungselemente (21) angeordnet sind.

12. Windkraftanlage nach Anspruch 11, dadurch gekennzeichnet, daß die Verbindungselemente (21) mit Zapfenlagern ausgebildet sind.

13. Windkraftanlage nach Anspruch 9 bis 12, dadurch gekennzeichnet, daß an dem Pylon (19) ein parallel zur Bewegungsrichtung der Flügel des Rotors (1,2) angeordneter Querträger (25) ausgebildet ist, zwischen dem und den Flügeln im Bereich von deren Längsschwerpunkten Drahtseile (26) od. dgl. angeordnet sind.

14. Windkraftanlage nach Anspruch 9 bis 13, dadurch gekennzeichnet, daß die Drahtseile (26) und/oder Verbindungselemente (21) derart zwischen dem Pylon (19) und den Flügeln des Rotors (1, 2) angeordnet sind, daß die Flügel durch Torsion den Windkräften, Zentrifugalkräften und dgl. durch einen variablen Anstellwinkel anpaßbar sind.

15. Windkraftanlage nach Anspruch 14, dadurch gekennzeichnet, daß die Drahtseile (26) und/oder Verbindungselemente (21) mittels passiver Stellelemente wie Federn oder aktiver Stellelemente wie Hydraulikzylinder, motorischer Antriebe oder mit dem Pylon (19) verbundener Zwangssteuerungen betätigbar sind.

16. Windkraftanlage nach Anspruch 1 und 15, dadurch gekennzeichnet, daß der Anstellwinkel der Flügel des Rotors (1, 2) durch Torsion der Flügel oder Drehung von Flügelabschnitten (27) um Gelenke (28) einstellbar ist.

17. Windkraftanlage nach Anspruch 1 bis 16, dadurch gekennzeichnet, daß die Flügel des Rotors (1, 2) einen Dreigurtträger (41) aufweisen, der jeweils aus einem Obergurt (42), Untergurt (43) und Hintergurt (44) besteht, die mittels Verstrebungen (46, 47) miteinander verbunden sind.

18. Windkraftanlage nach Anspruch 1 bis 24, dadurch gekennzeichnet, daß jeder Arbeitsflügel (3) aus Einzelflügeln besteht.

19. Windkraftanlage nach Anspruch 18, dadurch gekennzeichnet, daß der Arbeitsflügel (3) aus vier Einzelflügeln (29, 29a, 30, 30a) besteht, die jeweils im horizontalen bzw. vertikalen Abstand voneinander angeordnet und gittermastartig mittels profilierter Verbindungselemente (31, 48) miteinander verbunden sind.

20. Windkraftanlage nach Anspruch 10 bis 19, dadurch gekennzeichnet, daß zwischen den Flügeln des Rotors (1, 2) und dem Pylon (19) als Sekundärflügel ausgebildete Verbindungselemente angeordnet sind.

21. Windkraftanlage nach Anspruch 10 bis 20, dadurch gekennzeichnet, daß die Flügel des Rotors (1, 2) und die Sekundärflügel mit dem Pylon (19) und miteinander gitterartig mittels Stützflügel verbunden sind.

22. Windkraftanlage nach Anspruch 1 bis 21, dadurch gekennzeichnet, daß jeder Flügel des Rotors (1, 2) unsymmetrisch ausgebildet ist.

23. Windkraftanlage nach Anspruch 1 bis 22, dadurch gekennzeichnet, daß jeder Flügel des Rotors (1, 2) im Bereich des Flügelfußes (9, 10) in einem Wälz-, Gleit-, Rad-oder Magnetlager gelagert ist.

24. Windkraftanlage nach Anspruch 1 bis 23, dadurch gekennzeichnet, daß das Hauptlager (24) der Nabe (8) zur Energieerzeugung als ringförmiger Linearmotor oder ringförmiger Generator ausgebildet ist.

25. Windkraftanlage nach Anspruch 1 bis 24, dadurch gekennzeichnet, daß an mindestens einem der Flügel (1, 2) ein Sekundärrotor (32) angeordnet ist, der mit einer Energieerzeugungseinrichtung verbunden ist.

26. Windkraftanlage nach Anspruch 25, dadurch gekennzeichnet, daß der Sekundärrotor (32) als Zentrifugalgegengewicht ausgebildet ist.

27. Windkraftanlage nach Anspruch 25 und 26, dadurch gekennzeichnet, daß der Sekundärrotor (32) so angeordnet ist, daß bei Rotation der Flügel des Rotors (1, 2) ein diesem zugeordneter kreisringförmiger Strömungswirbel entsteht.

28. Windkraftanlage nach Anspruch 1 bis 26, dadurch gekennzeichnet, daß der Rotor (1, 2) und/oder der Sekundärrotor (32) mit einem Generator verbunden ist.

29. Windkraftanlage nach Anspruch 28, dadurch gekennzeichnet, daß der Generator mit einer zum Rotor (1, 2) und/oder zum Sekundärrotor (32) parallel geschalteten Wasserturbine verbunden ist.

30. Windkraftanlage nach Anspruch 28 und 29, dadurch gekennzeichnet, daß der Rotor (1, 2) mit einer Wasserpumpe verbindbar ist.

31. Windkraftanlage nach Anspruch 28 bis 30, dadurch gekennzeichnet, daß der Rotor (1, 2) und/oder der Sekundärrotor (32) mit dem Generator und/oder der Wasserpumpe wechselseitig verbindbar und der Generator mit einer parallel zum Rotor (1, 2) und/oder Sekundärrotor (32) geschalteten Wasserturbine in Wirkeingriff bringbar ist.

32. Windkraftanlage nach Anspruch 1 bis 27, dadurch gekennzeichnet, daß der Rotor (1, 2) mit der Schnecke eines Schraubenförderers verbunden ist und Flügel mit einem symmetrischen Profil aufweist.

33. Windkraftanlage nach Anspruch 1 bis 27 dadurch gekennzeichnet, daß der Rotor (1, 2) mit einer schrägstehenden Schiffsschraube oder über ein Umlenkgetriebe mit einer horizontal angeordneten Schiffsschraube verbunden ist.

34. Windkraftanlage nach Anspruch 1 bis 27, dadurch gekennzeichnet, daß der Rotor (1, 2) mit einer Wasserwirbelbremse od. dgl. als Wärmeerzeuger in Wirkverbindung steht.

35. Windkraftanlage nach Anspruch 1 bis 34, dadurch gekennzeichnet, daß parallel zum Rotor (1, 2) und/oder Sekundärrotor (32) eine Verbrennungskraftmaschine wie Gasturbine od. dgl. mit dem Generator verbunden ist, die alternativ oder ergänzend zum Rotor (1, 2) und/oder Sekundärrotor (32) mit dem Generator in Wirkeingriff bringbar ist.

36. Windkraftanlage nach Anspruch 8, dadurch gekennzeichnet, daß mittig an der Unterseite des Schwimmkörpers (19) ein Befestigungsanschlag (55) angeordnet ist, an dem ein Verankerungsmittel wie Halteseil oder Kette (56) befestigt ist, das mit einem Pfahl (57) od. dgl. verbunden ist.

37. Windkraftanlage nach Anspruch 36, dadurch gekennzeichnet, daß der Befestigungsanschlag (55) am Schiffslateralpunkt angeordnet ist.

38. Windkraftanlage nach Anspruch 36 und 37, dadurch gekennzeichnet, daß der Befestigungsanschlag (55) zur Längsachse des Schwimmkörpers (18) versetzt ist.

**Claims**

1. Wind-driven generating plant with a rotor the rotation axis of which is oriented in oblique-angled manner to the horizontal and hub for receiving the blade base with associated power transmission means is connected to a supporting member which ist arranged on a base plate or the like located approximately at zero level being rotatable about a vertical axis, characterized in that the longitudinal axis of blades (3, 4) of rotor (1, 2) is oriented in a oblique-angled manner to the rotation axis (5) in that way that by rotation of rotor (1, 2) each blade (3, 4) passes an at least approximately horizontal position.

2. Wind-driven generating plant according to claim 1, characterized in that the blade (3, 4) of rotor (1, 2) is arranged at an angle β of approximately 45° to 55° to rotation axis (5).

3. Wind-driven generating plant according to claim 1 and 2, characterized in that the supporting member (11) being connected with the rotor (1, 2) is arranged on a structure or a floating body (18) with or without an adjusting mechanism.

4. Wind-driven generating plant according to claims 1 to 3, characterized in that rotor (2) comprises a working blade (3) and a support blade (4) with counterweight (6).

5. Wind-driven generating plant according to claim 4, characterized in that working blade (3) and support blade (4) are braced with one another by means of bracing means (14) being aerodynamically profiled if need be.

6. Wind-driven generating plant according to claims 4 and 5, characterized in that the working blade (3) can be horizontally fixed to the ground.

7. Wind-driven generating plant according to claim 3, characterized in that the floating body (18) is constructed so that it is automatically directed into the incident wind flow direction by means of anchoring means.

8. Wind-driven generating plant according to claim 7, characterized in that the anchoring means are connected to the floating body (18) in such a way that the moments on the floating body (18) resulting from the water current conditions can be compensated in respect of the torque forces of rotors (1, 2).

9. Wind-driven generating plant according to claims 1 to 8, characterized in that hub (8) is connected to a rigid or rotatable pylon (19) coaxial to rotation axis (5) and which is braced to the blades of rotor (1, 2) or to the ground.

10. Wind-driven generating plant according to claim 9, characterized in that for diverting radial and tangential forces on blades of rotor (1, 2), pylon (19) is connected there to by means of guy ropes (20) and/or connecting members (21), which are fixed to bearings (22, 23).

11. Wind-driven generating plant according to claims 9 and 10, characterized in that rigid connecting members (21) are arranged between pylon (19) and blades of rotor (1, 2) in spaced manner with respect to the main bearing (24).

12. Wind-driven generating plant according to claim 11, characterized in that the connecting members (21) are constructed as pivot bearings.

13. Wind-driven generating plant according to claims 9 to 12, characterized in that a cross-beam (25) parallel to the direction of movement of the blades of rotor (1, 2) is constructed on pylon (19), wire cables (26) or the like being arranged between the cross-beam and the blades in the vicinity of their longitudinal centres of gravity.

14. Wind-driven generating plant according to claims 9 to 13, characterized in that the wire cables (26) and/or connecting members (21) are arranged between the pylon (19) and the blades of rotor (1, 2) in such a way that the blades can be adapted by torsion to the wind forces, centrifugal forces or the like, by means of a variable angle of incidence.

15. Wind-driven generating plant according to claim 14, characterized in that the wire cables (26) and/or connecting members (21) are operable by means of passive adjusting members, such as hydraulic cylinders, motor drives or forced control means connected to pylon (19).

16. Wind-driven generating plant according to claims 1 and 15, characterized in that the angle of incidence of the blades of rotor (1, 2) is adjustable by the torsion of the blades or the rotation of blade portions (27) about joints (28).

17. Wind-driven generating plant according to claims 1 to 16, characterized in that blades of rotor (1, 2) have a three-flange girder (41), comprising an upper flange (42), lower flange (43) and rear flange (44), which are interconnected by means of struts (46, 47).

18. Wind-driven generating plant according to claims 1 to 24, characterized in that each working blade (3) comprises individual blades.

19. Wind-driven generating plant according to claim 18, characterized in that the working blades (3) comprise four individual blades (29, 29a, 30, 30a), in each case arranged in a horizontally or vertically spaced manner with respect to one another and interconnected in lattice mast-like manner by profiled connecting members (31, 48).

20. Wind-driven generating plant according to claims 10 to 19, characterized in that between the blades of rotor (1, 2) and pylon (19) are arranged connecting members constructed as secondary blades.

21. Wind-driven generating plant according to claims 10 to 20, characterized in that the blades of rotor (1, 2) and the secondary blades are connected to pylon (19) and to one another in lattice-like manner by means of support blades.

22. Wind-driven generating plant according to claims 1 to 21, charactericed in that each blade of rotor (1, 2) is constructed asymmetrically.

23. Wind-driven generating plant according to claims 1 to 22, characterized in that each blade of the rotor (1, 2) is mounted in the vicinity of the blade base (9, 10) in a slide, antifriction, wheel or magnetic bearing.

24. Wind-driven generating plant according to claims 1 to 23, characterized in that the main bearing (24) of hub (8) is constructed as an annular linear motor or annular generator for power generating purposes.

25. Wind-driven generating plant according to claims 1 to 24, characterized in that a secondary rotor (32) connected to a power generating means is arranged on at least one of the rotors (1, 2).

26. Wind-driven generating plant according to claim 25, characterized in that the secondary rotor (32) is constructed as a centrifugal counterweight.

27. Wind-driven generating plant according to claims 25 and 26, characterized in that the secondary rotor (32) is arranged in such a way that on rotating the blades of rotor (1, 2) a circular flow vortex associated therewith is produced.

28. Wind-driven generating plant according to claims 1 to 26, characterized in that rotor (1, 2) and/or secondary rotor (32) is connected to a generator.

29. Wind-driven generating plant according to claim 28, characterized in that the generator is connected to a water turbine connected in parallel to the rotor (1, 2) and/or secondary rotor (32).

30. Wind-driven generating plant according to claims 28 and 29, characterized in that rotor (1, 2) can-be connected to a water pump.

31. Wind-driven generating plant according to claims 28 to 30, characterized in that rotor (1, 2) and/or secondary rotor (32) can be connected in alternating manner to the generator and/or water pump and that the generator can be brought into working engagement with a water turbine connected in parallel to rotor (1, 2) and/or secondary rotor (32).

32. Wind-driven generating plant according to claims 1 to 27, characterized in that rotor (1, 2) is connected to the screw of a screw conveyor and the blades have a symmetrical profile.

33. Wind-driven generating plant according to claims 1 to 27, characterized in that rotor (1, 2) is connected to a sloping marine propeller or by means of a reversing gear to a horizontally arranged marine propeller.

34. Wind-driven generating plant according to claims 1 to 27, characterized in that rotor (1, 2) is in operative connection as a heat generator with a hydraulic brake or the like.

35. Wind-driven generating plant according to claims 1 to 34, characterized in that parallel to rotor (1, 2) and/or secondary rotor (32) an internal combustion engine such as a gas turbine or the like is connected to the generator and can be brought into working engagement with the latter alternatively or additionally to rotor (1, 2) and/or secondary rotor (32).

36. Wind-driven generating plant according to claim 8, characterized in that centrally on the bottom of the floating body (18) is provided a fastenening means (55), to which is fixed an anchoring means such as a guy rope or chain (56), which is connected to a pile (57) or the like.

37. Wind-driven generating plant according to claim 36, characterized in that the fastening means (55) is provided at the lateral point of the ship.

38. Wind-driven generating plant according to claims 36 and 37, characterized in that the fastening means (55) is displaced relative to the longitudinal axis of the floating body (18).


**Revendications**

1. Une éolienne avec un rotor dont l'axe de rotation est formé à l'angle oblique à la ligne horizontale et dont le moyeu qui sert pour la réception de la base d'aile, avec des moyens de transport de l'énergie, ressortisant au moyeu, est joint avec une pièce d'appui, laquelle est arrangée sur une surface de base approchante en niveau zéro et est mobile sur l'axe vertical, est marquée tellementque l'axe longitudinal de l'aile (3, 4) du rotor (1, 2) est arrangé de telle manière a l'angle oblique sur l'axe de rotation (5) du rotor (1, 2) qu'en cas de la rotation du rotor (1, 2) chaque aile (3, 4) passe approchante une position horizontale.

2. L'éolienne d'après la spécification du brevet 1 est marquée tellement que chaque aile (3, 4) du rotor (1, 2) est arrangée dans un angle β d'environ 45° à 55° sur l'axe de rotaion (5) du rotor (1, 2).

3. L'éolienne d'après les spécifications du brevet 1 et 2 est marquée tellement que la pièce d'appui (11), jointe avec le rotor (1, 2), est arrangée sur un tréteau au un corps flottant (18) avec ou sans une installation de fixation.

4. L'éolienne d'après les spécifications du brevet 1 à 3 est marquée tellement que le rotor (2) est composé d'une aile d'opération (3) et une aile de support (4) avec contrebalance.

5. L'éolienne d'après la specification du brevet 4 est marquée tellement que l'aile d'operation (3) et l'aile de support (4) sont croisillonnées l'un avec l'autre au moyen de tendeurs (14), lesquels sont, le cas échéant, profilés aérodynamiques.

6. L'éolienne d'après les spécifications du brevet 4 et 5 est marquèe tellement que l'aile d'opération (3) est verifiable en position horizontale au sol.

7. L'éolienne d'après la spécification du brevet 3 est marquée tellement que le corps flottant (18) est formé à l'aide de moyens d'ancrage à la direction du vent affluée respective, orienté indépendant.

8. L'éolienne d'après la spécification du brevet 7 est marquée tellement que les moyens d'ancrage sont joints de telle manière avec le corps flottant (18), que les couples sur le corps flottant (18), dû au courant de l'eau, sont compensables par rapport à la force de moment d'un couple du rotor (1, 2).

9. L'éolienne d'après les spécifications du brevet 1 à 8 est marquée tellement que le moyen (8) est joint avec un pylône (19) rigide au mobile sur un axe qui est coaxial sur l'axe de rotation (5), lequel est croisillonné sur les ailes du rotor (1, 2) ou sur le sol.

10. L'éolienne d'après la spécification du brevet 9 est marquée tellement que le pylône (19) est attaché aux ailes de rotor (1, 2) pour la dérivation des forces radiales et tangentielles au moyen de câbles tendeurs (20) et/ou d'éléments de jonction (21), lesquels sont joints aux paliers (22, 23).

11. L'éolienne d'après les spécifications du brevet 9 et 10 est marquée tellement qu'entre le pylône (19) et les ailes de rotor (1, 2) dans la distance du palier principal (24) des éléments de jonctions (21) rigides sont arrangés.

12. L'éolienne d'après la spécification du brevet 11 est marquée tellement que les éléments de jonctions (21) sont formés avec des paliers d'un tourillon.

13. L'éolienne d'après les spécifications 9 à 12 est marquée tellement que sur le pylône (19) une traverse (25) est formèe, laquelle est arrangée parallelement sur le sens de mouvement des ailes de rotor (1, 2). Entre la traverse et les ailes dans la zone de leur barycentre longitudinal des câbles métallique (26) ou autres choses semblables sont arrangés.

14. L'éolienne d'après les spécifications du brevet 9 à 13 est marquée-tellement que les câbles métalliques (26) et/ou les éléments de jonction (21) sont arrangés de telle manière entre les pylons (19) et les ailes de rotor (1, 2), qu'on peut adapter les ailes partorsion à l'énergie éolienne, à la force centrifuge ou autres choses semblables par un angle d'incidence.

15. L'éolienne d'après la spécification du brevet 14 est marquée tellement qu'on peut opérer les câbles métalliques (26) et/ou les éléments de jonction (21) au moyen d'agents de fixation passifs comme des ressorts ou d'agents de fixation actifs comme des cylindres hydrauliques, de commandes moteures ou des directions enforcées jointes avec le pylôn (19).

16. L'éolienne d'après les spécifications du brevet 1 et 15 est marquée tellement que l'angle incidence des ailes du rotor (1, 2) est ajustable par torsion des ailes ou par rotation des

8

morceaux détachés des ailes (27) au tour de joints (28).

17. L'éolienne d'après les spécifications du brevet 1 à 16 est marquée tellement que les ailes de rotor (1, 2) montrent une peutre triangulaire (41), Laquelle est composée d'un brin supérieur (42), d'une membrane inférieure (43) ou d'un brin derrièr (44), lesquels sont joints au moyen d'entre toisements (46, 47).

18. L'éolienne d'après les spécifications du brevet 1 à 24 est merquée tellement que chaque aile d'opération (3) est composée d'ailes individuelles.

19. L'éolienne d'après la spécification du brevet 18 est marquée tellement que l'aile d'opération (3) est composée de quatre ailes individuelles (29; 29a; 30; 30a), lesquelles sont arrangées respectivement en distance horizontalement ou verticalement l'un de l'autre et sont jointes l'un avec l'autre au moyen d'éléments de jonction (31, 48) profilés en forme d'un pylône en treillis.

20. L'éolienne d'après les spécifications du brevet 10 à 19 est marquée tellement qu'entre les ailes de rotor (1, 2) et le pylône (19) des éléments de jonction, formé comme une aile secondaire, sont arrangés.

21. L'éolienne d'après les spécifications du brevet 10 à 20 est marquée tellement que les ailes de rotor (1, 2) et les ailes secondaires sont jointes avec le pylône (19) et l'un avec l'autre en forme treillissé au moyen de l'aile de support.

22. L'éolienne d'après les spécifications du brevet 1 à 21 est marquée tellement que chaque aile de rotor (1, 2) est formée asymétriquement.

23. L'éolienne d'après les spécifications du brevet 1 à 22 est marquée tellement que chaque aile de rotor (1, 2) dans la zone de la base d'aile (9, 10) est mis dans un palier à roulement, un palier à glissement, un palier ou un palier magnétique.

24. L'éolienne d'après les spécifications du brevet 1 à 23 est marquée tellement que le palier principal (24) du moyeu (8) est formé comme un moteur électrique lineaire en forme d'anneau ou comme un générateur en forme d'anneau pour la production de l'énergie.

25. L'éolienne d'après les spécifications du brevet 1 à 24 est marquée tellement que sur une aile (1, 2) au moyeu un rotor secondaire (32) est arrangé qui est joint avec une installation pour la production de l'énergie.

26. L'éolienne d'après la spécification du brevet 25 est marquée tellement que le rotor secondaire (32) est formé comme un contre poids centrifuge.

27. L'éolienne d'après les spécifications du brevet 25 et 26 est marquée tellement que le rotor secondaire (32) est arrangé de telle maniére qu'en cas de la rotation des ailes de rotor (1, 2) un cours tournant en forme d'une couronne circulaire se produit.

28. L'éolienne d'après les spécifications du brevet 1 à 26 est marquée tellement que le rotor (1, 2) et/ou le rotor secondaire (32) est joint avec un générateur.

29. L'éolienne d'après la spécification du brevet 28 est marquée tellement que le generateur est joint avec une turbine hydraulique, laquelle est couplée parallelement au rotor (1, 2) et/ou au rotor secondaire (32).

30. L'éolienne d'après les spécifications du brevet 28 et 29 est marquée tellement qu'on peut joindre le rotor avec une pompe à eau.

31. L'éolienne d'après les spécifications du brevet 28 à 30 est marquée tellement qu'on peut joindre réciproquement le rotor (1, 2) et/ou le rotor secondaire (32) avec le générateur et/ou la pompe à eau et qu'on met le générateur en action avec une turbine hydraulique, qui est couplée parallelement au rotor (1, 2) et/ou au rotor secondaire (32).

32. L'éolienne d'après les specifications du brevet 1 à 27 est marquée tellement que le rotor (1, 2) est joint avec une vis sans fin d'un convoyeur à vis sans fin et qu'il montre des ailes avec un profil symétrique.

33. L'éolienne d'après les spécifications du brevet 1 à 27 est marquée tellement que le rotor (1, 2) est joint avec une hélice de navire en postion oblique ou il est joint avec une hélice de navire en postion horizontale sur un engrenage de renvoi.

34. L'éolienne d'après les spécifications du brevet 1 à 27 est marquée tellement qu'on met le rotor (1, 2) en action avec un frein hydraulique ou autres choses semblables comme dégagement de chaleur.

35. L'éolienne d'après les spécifications du brevet 1 à 34 est marquée tellement que parallel au rotor (1, 2) et/ou au rotor secondaire (32) une machine à combustion interne, comme une turbine à gaz ou autres choses semblables, est jointe avec le générateur laquelle on doit mettre en action avec le generateur, alternativement ou supplémentairement au rotor secondaire (32).

36. L'éolienne d'après la spécification du brevet 8 est marquée tellement qu'au milieu de la face inférieure du corps flottant (19) un anneau de fixation (55) est formé, auquel un moyen d'ancrage est attaché, comme un câble d'ancrage ou une chaine (56), lequel est joint avec un pieu ou autres choses semblables.

37. L'éolienne d'après la spécification du brevet 36 est marquée tellement que l'anneau de fixation (55) est arrangé au point latéral du bateau.

38. L,éolienne d'après les spcifications du brevet 36 et 37 est marquée tellement que l'anneau de fixation (55) est déplacé à l'axe longitudinal du corps flottant (18).

Fig.2

Fig.1

*1*

*2*

Fig.3a

Fig.3b

Fig.3c

Fig.3d

Fig4a

Fig.4b

Fig.5a

Fig.5b

Fig.6a

Fig.6c

Fig.6b

Fig. 7